# EUROPÄISCHE PATENTSCHRIFT

(11) **EP 2 495 466 B1**
(45) Veröffentlichungstag und Bekanntmachung des Hinweises auf die Patenterteilung: **09.04.2014**
(21) Anmeldenummer: 11010143.3
(22) Anmeldetag: 22.12.2011
(51) Int. Cl.: F16C 33/64, C21D 9/40

(54) **Wälzlageranordnung mit geneigt verlaufenden Härtezonen**
Roller bearing assembly with inclined hardening zones
Agencement de palier à roulement ayant des zones durcies s'étendant de manière inclinée

(43) Veröffentlichungstag der Anmeldung: 05.09.2012
(73) Patentinhaber: IMO Holding GmbH, 91350 Gremsdorf (DE)
(72) Erfinder: Frank, Hubertus, 91315 Höchstadt (DE)
(74) Vertreter: Küchler, Stefan

(56) Entgegenhaltungen:
- JP-A- 11 248 726
- JP-A- 2002 174 251

## Beschreibung

Die Erfindung betrifft eine Wälzlageranordnung für eine Drehverbindung zwecks Relativverstellung mehrerer, mindestens zweier, gegeneinander gelagerter Drehkörper, insbesondere gegeneinander gelagerter Wälzlagerringe, wobei mindestens eine Wälzkörperlaufbahn entlang ihrer Ringform im Kontaktbereich zwischen Wälzkörper und Wälzlagerring gehärtet ist, gemäß dem Oberbegriff des Hauptanspruchs. Die Erfindung charakterisierend ist ein Überlappungsbereich zu Beginn und Ende der jeweiligen Wälzkörperlaufbahn gemäß kennzeichnendem Teil des Hauptanspruchs und gemäß den im den nebengeordneten Patentansprüchen, angegebenen zusätzlichen Merkmalen.

Aktueller Stand der Technik sieht für Wälzlagerringe häufig eine Härtung der Laufbahnen vor, da dadurch unter Anderem die Tragfähigkeit, und infolge dessen die Lebensdauer einer Wälzkörperanordnung für eine Drehverbindung erhöht wird. Gemäß dem Stand der Technik sind zum einen Durchlaufhärteöfen bekannt, bei denen die durchzuhärtenden Werkstücke, beispielsweise Wälzlagerringe, eine Vorrichtung in Längsrichtung durchlaufen und dabei derart erwärmt werden, wobei nur gewisse Teilbereiche des jeweiligen Wälzlagerringes gehärtet werden. Eines der häufigsten zur Laufbahnhärtung eingesetzten Härteverfahren ist die Induktivhärtung. Bei diesem Verfahren werden Induktoren oder Induktionsköpfe relativ zu einem zu härtenden Ring oder relativ zu einer zu härtenden Laufbahn oder einer Teilstelle des Wälzlagerringes bewegt.

Das Patentdokument DE102007014637 weist eine derartige Vorrichtung zum induktiven Erwärmen wenigstens von Randschichten eines ringförmigen Werkstücks auf. Die Induktoren oder Induktionsköpfe sind dabei wenigstens hinsichtlich ihrer radialen Abstände untereinander ortsveränderlich.
Auch die W02010007635 (PCT/IT2008/000475) und die EP1988179 weisen Methoden und Vorrichtungen auf, mit denen Teilbereiche oder Laufbahnen von Wälzkörperringen induktiv gehärtet werden können. Dabei sind mindestens zwei Induktoren oder Induktionsköpfe im Einsatz, welche in einer voreingestellten Distanz zur zu härtenden Oberfläche angebracht sind, während sich zu härtendes Werkstück und Induktor relativ zueinander bewegen. Letztlich offenbart ferner die DE102005006701 ein Verfahren zum Herstellen eines Lagerringes für Großwälzlager, welches nach einem grundsätzlich ähnlichen Prinzip funktioniert.

Für den Einbau der Drehverbindungen in der Praxis spielt ferner der sogenannte "Härteschlupf" eine teils wichtige Rolle. Dieser Härteschlupf bezeichnet die Stoßstelle zwischen Anfang und Ende der Laufbahnhärtung. Diese Stelle ist in der Praxis jene Stelle, welche während des Härteprozesses der Laufbahn, insbesondere während des Induktivhärteprozesses, nicht oder kaum mitgehärtet wurde. Fast alle Wälzkörperanordnungen nach aktuellem Stand dieser Technologie verfügen über einen solchen Härteschlupf-bereich.

Die JP2002174251 zeigt (Abb. [4] sowie auch Abb. [6]) prinzipiell und beispielhaft einen besonders dimensionierten solchen Bereich des Härteschlupfes, dargestellt als ein fensterartiges Teilstück (53) in Erstreckung entlang einer Wälzkörperlaufbahn (12), angeordnet zwischen zwei angrenzenden, gehärteten Bereichen (52B ; 52A).

Diese Stelle ist in der Regel deshalb mithin von geringerer Härte als das umgebende, gehärtete Material. Weniger harte Laufbahnen sind für das Abrollverhalten der Wälzkörper zumeist mit Nachteilen behaftet, da die Tragfähigkeit in weniger harten Laufbahnabschnitten geringer ist als an den gehärteten Laufbahnabschnitten.
Darüber hinaus verfügen viele Wälzkörperanordnungen, insbesondere Kugeldrehverbindungen, beispielsweise bei Vierpunktlager, über Bohrungen, mit welchen das Laufbahnsystem mit Wälzkörpern, insbesondere Kugelwälzkörpern, befüllt werden können. Diese Bohrungen werden mit entsprechend eingepassten, zu dem Bohrlohdurchmesser korrespondierenden, Befüllstopfen versehen und verschlossen. Auch der Bereich der Befüllbohrung und des zugehörigen Befüllstopfens stellt mithin eine Schwachstelle des Laufbahnsystems dar, da die Tragfähigkeit in jenem Bereich Laufbahnabschnitten geringer ist als an den gehärteten Laufbahnabschnitten.

Die JP11248726 (Abb. [6]) zeigt den soeben beschriebenen Bereich der Befüllbohrung, welcher in der Regel nicht gehärtet ist, wodurch die Tragfähigkeit in jenem Bereich Laufbahnabschnitten geringer ist als an den gehärteten Laufbahnabschnitten. (Die Durchführung einer Induktionshärtung auch im Bereich der Befüllbohrung würde infolge der Wärmeeinwirkung und der folgenden Gefügeänderung einen nicht unwesentlichen geometrischen "Verzug" in dem Bereich der Befüllbohrung bewirken. Dadurch könnte der zugehörige und passgenaue Befüllstopfen nicht oder nur sehr schwer passend in das Loch der Befüllbohrung eingeführt werden. Aus diesem Grund wird in der Praxis in der Regel von einer Härtung im Bereich der Befüllbohrung(en) gänzlich abgesehen).

In der Praxis versucht man die beiden genannten Nachteile dadurch zu mindern, dass an die Stelle des Härteschlupfes und jene Bohrungen für Ein- und Auslass der Wälzkörper in- und aus dem Laufbahnsystem nahe beieinander anzubringen, sodass anstatt zweier Stellen mit geringerer Tragfähigkeit im Laufbahnsysten nur eine derartige Stelle gegeben ist. In der Praxis der Kugeldrehverbindungen, beispielsweise bei Vierpunktlagern, ist die Stelle des Härteschlupfes also überdies gekennzeichnet durch den Füllstopfen für eine Bohrung, durch welche die Wälzkörper bei Befüllung des Laufbahnsystems und Entnahme aus dem Laufbahnsystem geschoben werden. Diese Bohrung hat in der Regel einen etwas größeren Querschnitt als die Wälzkörper des Laufbahnsystemes selbst. Bei einigen Wälzkörperanordnungen, beispielsweise bei Rollendrehverbindungen, werden keine derartigen Befüllbohrungen benötigt.

In der Praxis und nach Stand der Technik folgt dieser Bereich des Härteschlupfes einer gedachten Linie, welche vom Mittelpunkt des Wälzlagerringes ausgeht und sich radial erstreckt. Der Bereich des Härteschlupfes markiert folglich den Anfang und das Ende des gehärteten Bereiches eines Wälzlagerringes.

Bei allen derzeit gebräuchlichen Systemen zum (induktiven) Erwärmen von Teilbereichen eines ringförmigen Werkstücks, auch bei allen vorstehend genannten Systemen zum insbesondere induktiven Erwärmen der Wälzkörperlaufbahnen eines Wälzlagerringes, steht der mindestens eine Induktor oder Induktionskopf senkrecht zur zu härtenden Wälzkörperlaufbahn, sodass sich am Anfang und am Ende jeder induktiv gehärteten Zone ein nahezu exakt radial zur Laufbahn erstreckender Härteschlupf-bereich ergibt. Der Härteschlupf-bereich, als auch der gehärtete Bereich, ergibt sich parallel versetzt zu der Ebene, welche während des Härtevorgangs vom Induktor oder Induktionskopf kreisförmig durchlaufen wird. Härteschlupf-bereich und gehärtete Zone ergeben sich demnach stets auf der gleichen Werkstückoberfläche/ Wälzkörperlaufbahn.

Dieser Härteschlupf-bereich kann zwischen einem und mehr als fünfzehn Millimeter, in Ausnahmefällen sogar wesentlich mehr, teilweise bis 100 oder 200 Millimeter betragen, und ist abhängig von der Wälzkörpergröße, der Maschineneinstellung und von der Bedienung der Induktivhärtevorrichtung oder Induktivhärtemaschine. In Einzelfällen sind Induktivhärtemaschinen mit Inkrementalwinkelgebern ausgestattet, welche die Härtung bei beispielsweise 0° beginnen lassen und bei beispielsweise 359° enden lassen, sodass vom Induktor oder Induktionskopf stets ein nicht ganz 360° betragendes Kreissegment durchlaufen wird. In der Regel wird versucht, diesen Härteschlupfbereich möglichst gering zu halten, da dies ein Bereich geringerer Härte und somit einen Bereich geringerer Belastbarkeit darstellt, welcher in der Regel hinterschliffen wird oder hinterschliffen werden muss. Jenes Hinterschleifen verursacht einen weiteren Prozessschritt, welcher mehr Aufwand bedeutet.

Nachteilig an den bisherigen, herkömmlichen Systemen zum Induktivhärten von Wälzkörperringen ist, dass der vorgenannte sich nahezu exakt radial zur Laufbahn erstreckende Härteschlupf-bereich in der Praxis, insbesondere beim Überrollen der in der Regel gehärteten Wälzkörper über diesen Härteschlupf-bereich, negativ verhält. Folglich sind auch die nach herkömmlichen Systemen zum Induktivhärten gehärteten Wälzlagerringe im Härteschlupf-bereich nachteilig gegenüber den gehärteten Bereichen.

Zum Einen ist die Tragfähigkeit eines herkömmlich induktiv gehärteten Wälzlagerringes im Bereich des Härteschlupfes vermindert gegenüber dem restlichen Teil der gehärteten Laufbahn, zum Zweiten erstreckt sich dieser Härteschlupf-bereich in exakt radial entlang einer gedachten Linie vom Ringmittelpunkt nach Außen, sodass sich ein abruptes Ändern des Laufverhaltens des Wälzkörpers in der Drehverbindung ergibt, welcher gerade den Bereich des Härteschlupfes durchläuft, welches zum Dritten für erhöhte Laufgeräusche der gesamten Wälzkörperanordnung oder Drehverbindung sorgt.

Diese Nachteile betrachtend ergibt sich eine die vorliegende Erfindung initiierende Aufgabe, eine verbesserte Wälzlageranordnung zu schaffen, welche verbessertes Laufverhalten aufweist bei gleichzeitig erhöhter Tragfähigkeit in den Anfangs- und Endbereichen der Laufbahnhärtung(en) bei gleichzeitig verminderten Laufgeräuschen der Drehverbindung oder Wälzkörperanordnung insbesondere in den Anfangsund Endbereichen der Laufbahnhärtung(en) und insbesondere im jeweiligen Bereich des Härteschlupfes.

Beschrieben wird eine erfindungsgemäße Wälzlageranordnung für eine Drehverbindung mit kugel-, (zylinder)rollen-, tonnenrollen-, kegelrollen-, oder kreuzrollenförmigen Wälzkörpern, beispielsweise ein Kugelwälzkörper Laufbahnsystem, vorzugsweise jedoch insbesondere ein Rolle/ Kugel Kombinationslaufbahnsystem, in der mehrere an- oder gegeneinander gelagerte Drehkörper relativ und konzentrisch zueinander verstellt werden können. Dies trifft beispielsweise auf zwei an- oder gegeneinander gelagerter Wälzlagerringe zu, aber beispielsweise auch auf mehrere aneinander gelagerte Ringsegmente oder segmentierter Ringe. Die erfindungsgemäße Wälzkörperanordnung ist stets so ausgestaltet, dass mindestens eine Wälzkörperlaufbahn vorhanden ist, die entlang ihrer Ringform im Kontaktbereich zwischen Wälzkörper und Wälzlagerring gehärtet ist, insbesondere durch ein Induktions- oder induktives Härteverfahren gehärtet wurde.

Die induktive Erhärtung entsteht erfindungsgemäß durch eine starke Erhitzung des zu härtenden Werkstoffes, welcher in der Regel als ein Körper aus Vergütungsstahl oder aus Wälzlagerstahl vorliegt, auf über 600 °C, insbesondere auf über 800°C. Durch eine anschließende Abschreckung des Materiales mittels eines dafür geeigneten Abschreckmediums, welche zumeist eine flüssige Emulsion darstellt, etwa ein Zubereitung aus Polyglykolen, Additiven und Wasser, ändert sich das Gefüge des Materiales / Stahles. Es wird zum Einen feinkristalliner und zum Anderen härter. Als härtbare Hauptstahlwerkstoffe für Wälzlager werden 25CrMo4 oder 42rCrMo4, oder C45N sowie Halbedelstähle, beispielsweise X20Cr13, verwendet.

Das zu härtende erfindungsgemäße Laufbahnsystem kann dabei - je nach Form und Aufgabenstellung - verschiedene Wälzkörper beinhalten. Als Wälzkörper, welche in der erfindungsgemäßen Anordnung verwendet werden können, kommen grundsätzlich kugel-, rollen-, kugelrollen, tonnen-, kegel,-förmige oder über kreuz angeordnete Rollen-förmige oder gar pendelrollen-förmige Wälzkörper in Frage. Das Laufbahnsystem kann auch als Kombilager oder Kombinationssystem ausgeführt sein, beispielsweise als Rolle/ Kugel-Kombiverbindung.

Vorteilhaft ist das Härteverfahren für die Laufbahn so auszulegen, dass der Härtegrad der gehärteten Laufbahn in etwa dem Härtegrad der verwendeten Wälzkörper entspricht, oder leicht darunter liegt, beispielsweise im groben Bereich zwischen 48 HRC und 65 HRC.

Diese erfindungsgemäß verbesserte Wälzlageranordnung ist also als Drehverbindung zwecks Relativverstellung mindestens zweier an- oder gegeneinander gelagerter Drehkörper zu verstehen, insbesondere zweier an- oder gegeneinander gelagerter Wälzlagerringe, wobei mindestens eine Wälzkörperlaufbahn entlang ihrer Ringform im Kontaktbereich zwischen Wälzkörper und Wälzlagerring gehärtet ist, insbesondere durch ein Induktions- oder induktives Härteverfahren gehärtet wurde.

Die Erfindung kennzeichnend ist mindestens ein Überlappungsbereich am Beginn und am Ende der mindestens einen gehärteten Wälzkörperlaufbahn, welcher sich entlang dieser Wälzkörperlaufbahn erstreckt, wobei dieser Überlappungsbereich einen Bereich geringerer Härte, der vorgenannt als Härteschlupf bezeichnete Bereich, aufweist, welcher sich durch den Überlappungsbereich unter einem bestimmten Winkel gegenüber der Laufbahnnormalen erstreckt. Unter der Laufbahnnormalen zu verstehen ist dabei die gedachte Linie, welche sich radial aus dem Kreismittelpunkt der Wälzlageranordnung heraus, ergo von der Rotationsachse der Drehverbindung aus, radial in Richtung Ring erstreckt.

Das Laufbahnsystem kann dabei auch zur Aufnahme von Käfigen oder Distanzstücken geeignet sein, oder für ein Beabstandungskomponenten loses System, beispielsweise für eine vollrollige oder vollkugelige Drehverbindung, geeignet sein. Insbesondere vorteilhaft im Rahmen der Erfindung ist ein zwischen 0° und 90° geneigter Härteschlupf-bereich, vorzugsweise unter einem Winkel gegenüber Laufbahnnormalen von größer als 5° und kleiner als 85° geneigt. Als vorzugsweise praxisrelevant und gut herzustellen haben sich Winkel gegenüber Laufbahnnormalen von etwa 45° erwiesen.

In einer weiteren Ausgestaltung der Erfindung ist der geneigte Verlauf des Härteschlupf-bereichs nicht exakt linear, sondern kann einer Freiform oder Kurvenform oder bogenartigen Form folgen, oder gar einer Kombination aus Freiform und/ oder Kurvenform und/ oder Bogenform, gegebenenfalls mit vorhandenen geraden Teilstücken, folgen. Jedenfalls wird sich der Verlauf jedoch im Grundsatz schräg oder abgeschrägt über den Überlappungsbereich erstrecken.

In einer weiteren fortführenden Ausgestaltung der Erfindung kann der Überlappungsbereich sich nahe der mindestens einen in den Drehkörper eingebrachten Füllstopfen Bohrung befinden oder deckungsgleich zu diesem Füllstopfen Bohrungs Bereich sein oder zumindest diesen Bereich der Füllstopfen Bohrung überlagern oder durchdringen.

Wenn mehrere Laufbahnen gehärtet werden, so werden mehrere Überlappungsbereiche und Härteschlupf-bereiche geschaffen - im Regelfalle und vorzugsweise ein Härteschlupf-bereich pro gehärteter Laufbahn. Ein jeweiliger Überlappungsbereich und Härteschlupf-bereich befindet sich erfindungsgemäß sich stets je zwischen Beginn und zum Ende der jeweiligen Laufbahnhärtung.

Laut Maßgabe der Erfindung weist der mindestens eine Überlappungsbereich demnach, im Vergleich zum jeweils direkt umgebenden gehärteten Laufbahnbereich, jeweils mindestens einen Bereich geringerer Härte, sogenannter Härteschlupf-bereich, auf, wobei jener Bereich geringerer Härte ganz oder teilweise bearbeitet ist, sodass sich auch ein spurförmiger oder bandartiger Hinterschliff-bereich ergeben kann. Als besonders vorteilhaft hat sich eine spanende Nachbearbeitung, beispielsweise ein Nachschleifen oder ein Hinterschliefen, erwiesen.

Der genannte Hinterschliff-bereich kann sich mit dem Härteschlupf-bereich folglich jeweils ganz oder teilweise überlagern oder überlappen. Erfindungsgemäß kann in jeder Laufbahn der Wälzkörperanordnung mindestens ein Überlappungsbereich mit einen Bereich geringerer Härte eingebracht sein.

Aufgrund der Laufbahngestaltung ist eine erfindungsgemäße Folge, dass die Auslaufzonen- oder Auslaufbereiche der gehärteten Bereiche, insbesondere die Auslaufbereiche der Härtezonen, im Überlappungsbereich unter einem bestimmten Winkel hinsichtlich der Laufbahnnormalen geneigt sind. Diese Neigungswinkel können beispielsweise sehr ausgeprägt sein und zwischen 0° und 90° betragen, vorzugsweise jedoch einem Winkel von größer als 5° und kleiner als 85°, aufweisen, insbesondere jedoch einem Winkel von etwa 45° betragen.

Als weitere erfindungsgemäße Folge ist vorzustellen, dass sich im Betrieb der Drehverbindung oder Wälzlageranordnung die den Hinterschliff-bereich überrollenden Wälzkörper sich dort Hinterschliff-bereich in der Hauptsache vom gehärteten Bereich oder den Härtezonen abstützen und derartig getragen werden.

Generell gilt im Hinblick auf die Erfindung, dass die Einhärtetiefe des gehärteten Bereiches oder der Härtezone geringer ist als 20 mm sein kann, vorzugsweise geringer als 10 mm ist.
Bezüglich des Hinterschliff-bereiches oder des Härteschlupf-bereiches ist insgesamt festzustellen, dass der spurförmige oder bandartige Bereich geringerer Härte schmaler ist als 200 mm, vorzugsweise schmaler ist als 50 mm.

Weitere Vorteile uns Ausgestaltungsformen ergeben sich aus den folgend beispielhaft angeführten Zeichnungen. Dabei zeigen beispielhaft:

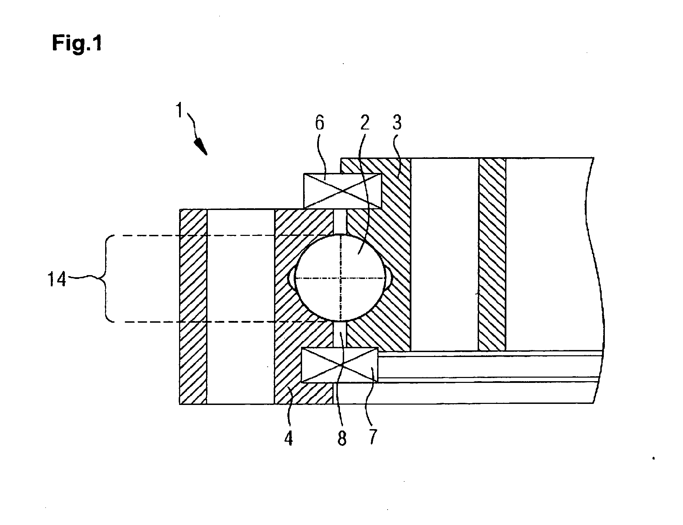

- Fig. 1: einen schematischen Radialschnitt eines Wälzkörperlaufbahnsystems einer Kugeldrehverbindung, ausgestaltet als Vierpunktlager mit beidseitig angedeuteten Befestigungsmöglichkeiten für Anschlusskonstruktionen und angedeuteten Dichtungssystemen sowie (gestrichelt gezeichnet) angedeuteter Füllstopfen Bohrung

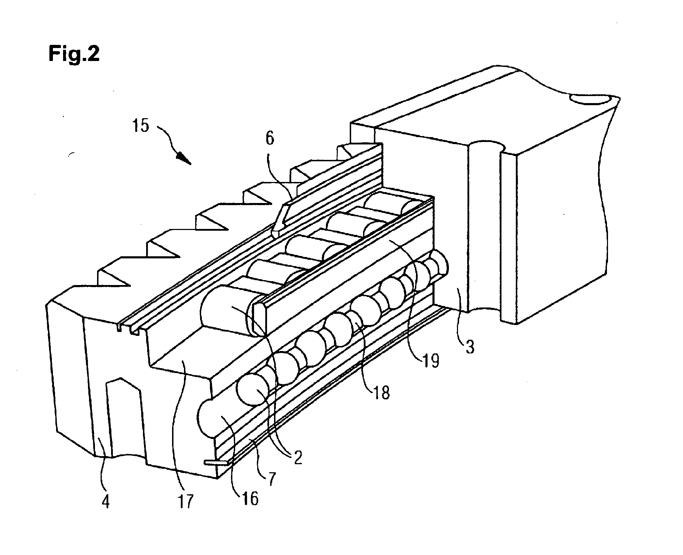

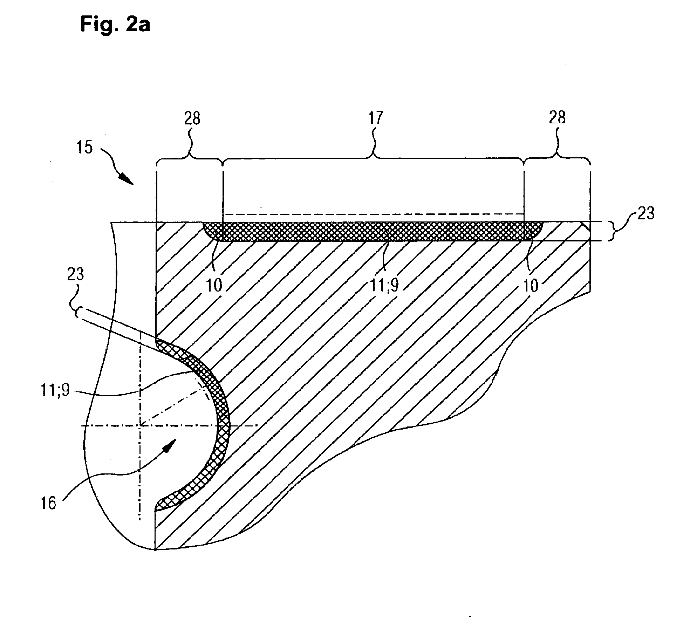

- Fig. 2: eine perspektivische Darstellung einer Drehverbindung eines Wälzkörperlaufbahnsystems einer Kombination aus Rolle/ Kugel mit zwei axial etwa übereinander angeordneten Laufbahnen. Das obere Laufbahnsystem deutet eine (käfiggeführte) Rollendrehverbindung mit an. Das untere Laufbahnsystem deutet eine Kugeldrehverbindung (mit Distanzstücken) an.
- Fig. 2 a: einen Teilschnitt (Detail/ Ausschnitt) als schematischen Radialschnitt der Drehverbindung eines Wälzkörperlaufbahnsystems einer Kombination aus Rolle/ Kugel mit zwei etwa axial übereinander angeordneten Laufbahnen. In dunkler Farbe angedeutet sind insbesondere gehärtete Bereiche an den Laufbahnen.

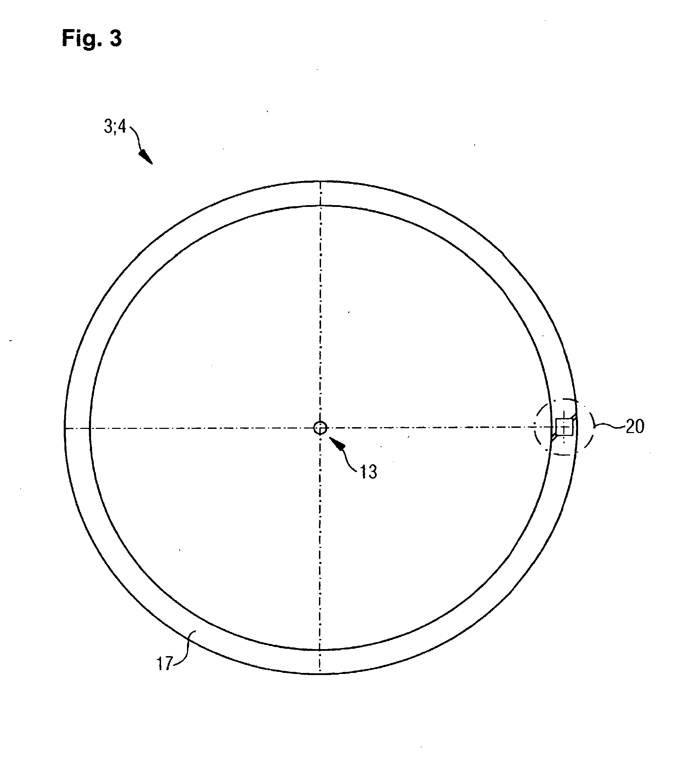

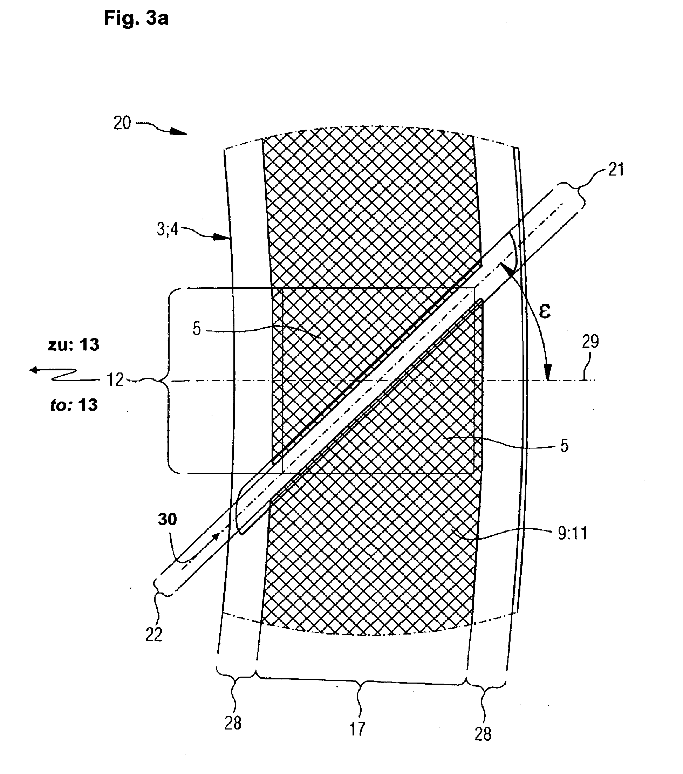

- Fig. 3: eine Draufsicht auf die Rollenlaufbahn (Wälzkörperlaufbahn Rolle), welche in dem jeweiligen Wälzlagerring vorhanden ist und auf welcher Rollenwälzkörper abrollen. Es wird auf einen Ausschnitt hingewiesen. Vereinfachend ist ausschließlich die Laufbahn dargstellt. Auf Details der Wälzkörperanordnung wird hierbei verzichtet.
- Fig. 3 a: ein Ausschnitt einer Draufsicht auf die Rollenlaufbahn (Wälzkörperlaufbahn Rolle), welcher den induktiv gehärteten Bereich sowie den Überlappungsbereich aufzeigt sowie Anfang und Ende der Laufbahnhärtung. Ebenfalls dargestellt ist ein band- oder spurförmiger Bereich, welcher eine Neigung unter einem Winkel ε aufweist.
- Fig. 4: eine schematische Ansicht (Detail/ Ausschnitt), stark vergrößert, eines möglichen Verlaufs von Härteschlupf und Härtezone innerhalb des Überlappungsbereiches im Kontaktbereich zwischen Wälzkörper und Laufbahn.

Fig. 1 zeigt beispielsweise einen schematischen Radialschnitt eines Wälzkörperlaufbahnsystems (1) einer Kugeldrehverbindung, ausgestaltet als Vierpunktlager mit beidseitig angedeuteten Befestigungsmöglichkeiten für Anschlusskonstruktionen und ober- und unterhalb des Laufbahnsystems vorhandenen Dichtungen (6 ; 7) zwecks Abdichtung des Wälzkörperspaltes (8). sowie angedeuteter Füllstopfen Bohrung (14). Die Wälzkörperlaufbahn für die Kugeln (16) wird befüllt und entleert über jene Bohrung (14), welche mittels eines Füllstopfens verschlossen wird. Dieser Füllstopfen verhindert das aus- und Eintreten von Fremdkörpern in das Laufbahnsystem indem der Füllstopfen das Laufbahnsystem verschließt. Die Füllstopfen Bohrung (14) hat in etwa den Durchmesser der Wälzkörper (2), ist in der Praxis jedoch minimal größer ausgelegt. Die Wälzkörperlaufbahn (16) ist sowohl in beide Drehkörper (3 ; 4) gleichermaßen eingebracht.

Fig. 2 zeigt beispielhaft eine perspektivische Darstellung einer Drehverbindung eines Wälzkörperlaufbahnsystems einer Kombination aus Rolle/ Kugel (15) mit zwei axial etwa übereinander angeordneten Laufbahnen (16 ; 17). Das obere Laufbahnsystem (17) deutet eine (käfiggeführte (19)) Rollendrehverbindung an. Das untere Laufbahnsystem deutet eine Kugeldrehverbindung (mit Distanzstücken (18)) an. Beide Laufbahnen (16 ; 17) sind in großen Teilen induktiv gehärtet. Die Wälzkörper (2) sind ebenfalls gehärtet und rollen über die Laufbahnen (16 ; 17) ab. Dargestellt ist eine Drehverbindung, welche einen äußeren Walzlagerring (4) gegen einen inneren Wälzlagerring (3) zu verdrehen vermag.

Fig. 3 stellt beispielsweise die Draufsicht auf das Laufbahnsystem der Rolle (17) dar, wobei vereinfachend ausschließlich die (gehärtete) Laufbahn abgebildet ist. Ein Ausschnitt (20) markiert den Überlappungsbereich (12) und ferner Anfangs- und Endbereich der Laufbahnhärtung.

Fig. 2 a zeigt beispielhaft einen Teilschnitt (Detail/ Ausschnitt) als schematischen Radialschnitt der Drehverbindung eines Wälzkörperlaufbahnsystems einer Kombination aus Rolle/ Kugel (15) mit zwei etwa axial übereinander angeordneten Laufbahnen. In dunkler Farbe angedeutet sind insbesondere gehärtete Bereiche an den Laufbahnen. Angedeutet sind insbesondere gehärtete Bereiche (9 ; 11) an den Laufbahnen (16 ; 17). Die gehärteten Bereiche verlaufen bis zu einer bestimmten Einhärtetiefe (23) in das Wälzlagerringmaterial. Gemäß Erfindung ergibt sich ein geneigt verlaufender Bereich geringerer Härte (22), welcher sich durch Auslaufbereiche (10) der gehärteten Bereiche vom Bereich geringerer Härte (22) abgrenzt. In der Regel verläuft der gehärtete Bereich bei einer Laufbahn (17) für Rollenwälzkörper nicht bis Ende der Planfläche, sondern ist beabstandet, verläuft folglich in einem Abstand (28) vom gehärteten Bereich (9 ; 11) zur Kante.

Fig. 3 a offenbart einen beispielhaften Ausschnitt (20) einer Draufsicht auf die Rollenlaufbahn (17) (Wälzkörperlaufbahn Rolle), welcher den induktiv gehärteten Bereich (9 ; 11) sowie den Überlappungsbereich (12) aufzeigt. Die Laufbahn ist in jeweils in den Wälzlagerring (3 ; 4) eingebracht. Der gehärtete Bereich befindet sich in der Mitte der Laufbahn, ist also von der Kante beabstandet (28). In dunkler Farbe angedeutet ist insbesondere der gehärtete Bereich (9 ; 11) der Laufbahn. Der Überlappungsbereich (12) definiert Beginn und Ende der mindestens gehärteten Wälzkörperlaufbahn (17), welcher sich entlang dieser Wälzkörperlaufbahn (17) erstreckt.
Der sich heller Farbe gegenüber dem in dunkler Farbe absetzende Bereich kennzeichnet einen Bereich geringerer Härte (22), insbesondere einen Härteschlupfbereich (22). Dieser Härteschlupf-bereich (22) erstreckt sich durch den Überlappungsbereich (12) unter einem bestimmten Winkel (ε) gegenüber der Laufbahnnormalen (29). Die Laufbahnnormale (29) ist die gedachte Linie, welche sich radial aus dem Kreismittelpunkt der Wälzlageranordnung heraus, folglich von der Rotationsachse (13) der Drehverbindung aus, radial in Richtung Ring erstreckt. Dieser Winkel (ε) beträgt zwischen 0° und 90°, vorzugsweise größer als 5° und kleiner als 85°, insbesondere etwa 45°. Der Bereich geringerer Härte (22) erstreckt sich beispielsweise spurförmig oder bandartig durch den Überlappungsbereich (12).

Fig. 3 a offenbart beispielsweise ferner, dass der Härteschlupf-bereich (22) im Überlappungsbereich (12), aber auch ein- oder beidseitig darüber hinaus ganz oder teilweise nachgeschliffen oder hinterschliffen ist, sodass ein spurförmiger oder bandartiger Hinterschliff-bereich (21) gegeben ist, wobei sich dieser Hinterschliff-bereich (21) und Härteschlupf-bereich (22) ganz oder teilweise überlagern oder überlappen. Der spurförmige oder bandartige Bereich geringerer Härte (22) ist in der Regel schmaler ist als 25 mm.

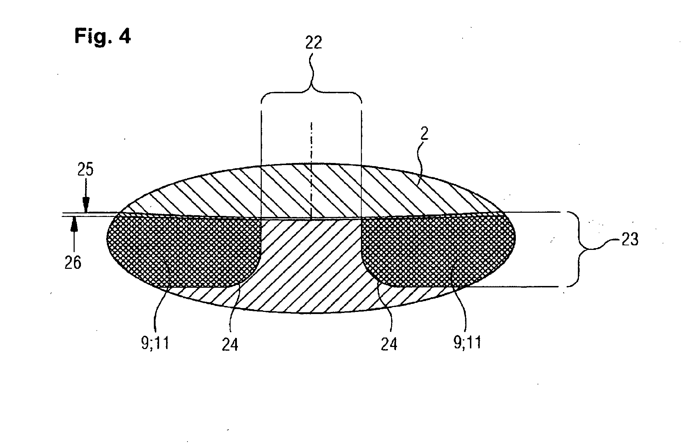

Fig. 4 offenbart schematisch und beispielhaft eine schematische Ansicht (Detail/ Ausschnitt), stark vergrößert, eines möglichen Verlaufs (24) von Härtezone und Härteschlupf (22) im Kontaktbereich zwischen Wälzkörper und Laufbahn. Dargestellt sind Einhärtetiefe (23) und Kontaktbereich (25 ; 26) von Wälzkörper und Wälzkörperlaufbahn. Die Einhärtetiefe (23) des gehärteten Bereiches (9) oder der Härtezone (11) ist in der Regel geringer ist als 20 mm.

### Bezugszeichenliste:

- (1): Wälzkörperlaufbahnsystem Kugel
- (2): Wälzkörper
- (3): Erster verdrehbarer Körper (Drehkörper), z.B.: Wälzlagerring
- (4): Zweiter verdrehbarer Körper (Drehkörper), z.B.: Wälzlagerring
- (5): oberer oder unterer Überlappungsbereich
- (6): Dichtungsanordnung
- (7): Dichtungsanordnung
- (8): Spalt
- (9): gehärteter Bereich
- (10): Auslaufbereich
- (11): Härtezone der gehärteten Wälzkörperlaufbahn
- (12): Bereich der Überlappung
- (13): Rotationsachse; Kreismittelpunkt
- (14): Füllstopfen Bohrung (gestrichelt angedeutet)
- (15): Wälzkörperlaufbahnsystem Kombination Rolle/ Kugel
- (16): Wälzkörperlaufbahn Kugel
- (17): Wälzkörperlaufbahn Rolle
- (18): Wälzkörperdistanzstück
- (19): Wälzkörperkäfig
- (20): Ausschnitt Wälzkörperlaufbahn Rolle
- (21): Hinterschliff-bereich
- (22): Bereich geringerer Härte, z.B.: Härteschlupf-bereich
- (23): Einhärtetiefe
- (24): Härteverlauf symbolisch
- (25): Kontaktbereich Wälzkörper - Laufbahn
- (26): Kontaktbereich Laufbahn - Wälzkörper
- (28): Abstand gehärteter Bereich zu Kante
- (29): Laufbahnnormale Achse
- (30): Verbindungslinie zwischen Oberem und Unterem Überlappungsbereich
- (ε): Neigungswinkel

## Patentansprüche

1. Wälzlageranordnung für eine Drehverbindung mit kugel-, zylinderrollen-, tonnenrollen-, oder kegelrollenförmigen Wälzkörpern, beispielsweise ein Kugelwälzkörper Laufbahnsystem (1), vorzugsweise auch ein Rolle/ Kugel Kombinationslaufbahnsystem (15), zwecks Relativverstellung mehrerer an- oder gegeneinander gelagerter Drehkörper (3 ; 4), insbesondere zweier an- oder gegeneinander gelagerter Wälzlagerringe, beispielsweise gar auch mehrerer aneinander gelagerter Ringsegmente oder segmentierter Ringe, wobei mindestens eine Wälzkörperlaufbahn (16 ; 17) entlang ihrer Ringform im Kontaktbereich zwischen Wälzkörper (2) und Wälzlagerring (3 ; 4) gehärtet ist, insbesondere durch ein Induktions- oder induktives Härteverfahren gehärtet wurde,
**dadurch gekennzeichnet, dass**
mindestens ein Überlappungsbereich (12) zu Beginn und Ende der mindestens einen gehärteten Wälzkörperlaufbahn (16 ;17) gegeben ist, welcher sich entlang dieser Wälzkörperlaufbahn (16 ; 17) erstreckt, wobei dieser Überlappungsbereich (12) einen Bereich geringerer Härte (22) als der ihn umgebende gehärtete Bereich (9 ;11) aufweist, vorzugsweise einen ungehärteten und/ oder angelassenen Bereich, insbesondere einen Härteschlupfbereich (22), welcher sich geneigt oder schräg, beispielsweise auch nicht-linear, durch den Überlappungsbereich (12) erstreckt.

2. Wälzlageranordnung für eine Drehverbindung nach Anspruch 1 **gekennzeichnet dadurch, dass**
sich der Anfang und das Ende der Laufbahnhärtung, insbesondere der Anfangsbereich und der Endbereich des gehärteten Bereiches (9 ; 11) einer Laufbahn (16 ; 17), entlang der Laufbahnnormalen (29) überdecken, überlagern oder überlappen.

3. Wälzlageranordnung für eine Drehverbindung nach Anspruch 1 **gekennzeichnet dadurch, dass**
sich der Härteschlupf-bereich (22) oder der Bereich geringerer Härte (22) unter einem bestimmten Winkel (ε) gegenüber der Laufbahnnormalen (29) zwischen 0° und 90° geneigt, vorzugsweise unter einem Winkel (ε) gegenüber Laufbahnnormalen (29) von größer als 5° und kleiner als 85°, insbesondere unter einem Winkel (ε) gegenüber Laufbahnnormalen (29) von etwa 45°, erstreckt.

4. Wälzlageranordnung für eine Drehverbindung nach Anspruch 1 **gekennzeichnet dadurch, dass**
sich der Härteschlupf-bereich (22) oder der Bereich geringerer Härte (22) in Richtung einer gedachten Verbindungslinie (30) zwischen dem oberen und dem unteren Überlappungsbereich (12) erstreckt, wobei der tatsächliche Verlauf dieses Härteschlupf-bereiches (22), zumindest teilweise, einer Freiform und/ oder einer Kurvenform und/ oder einer Bogenform folgt.

5. Wälzlageranordnung für eine Drehverbindung nach Anspruch 1 **gekennzeichnet dadurch, dass**
sich der Härteschlupf-bereich (22) oder der Bereich geringerer Härte (22) in Richtung einer gedachten Verbindungslinie (30) zwischen dem oberen und dem unteren Überlappungsbereich (12) erstreckt, wobei der tatsächliche Verlauf dieses Härteschlupf-bereiches (22) zumindest ein näherungsweise gerades Teilstück beinhaltet.

6. Wälzlageranordnung für eine Drehverbindung nach Anspruch 1 **gekennzeichnet dadurch, dass**
sich der Bereich geringerer Härte (22) spurförmig oder bandartig durch den Überlappungsbereich (12) erstreckt, beispielsweise einer Freiform und/ oder einer Kurvenform und/ oder einer Bogenform folgend, insbesondere zumindest ein näherungsweise gerades Teilstück beinhaltet.

7. Wälzlageranordnung für eine Drehverbindung nach Anspruch 1 **gekennzeichnet dadurch, dass**
der mindestens eine Überlappungsbereich (12) einen Bereich geringerer Härte (22) als der direkt umgebende Bereich (9 ;11) aufweist, wobei jener Bereich geringerer Härte (22) ganz oder teilweise abtragend nachgearbeitet ist, beispielsweise spanebhebend nachgearbeitet ist, insbesondere nachgeschliffen oder hinterschliffen ist, sodass sich insbesondere ein spurförmiger oder bandartiger Hinterschliff-bereich (21) ergibt.

8. Wälzlageranordnung für eine Drehverbindung nach Anspruch 7 **gekennzeichnet dadurch, dass**
Hinterschliff-bereich (21) und Bereich geringerer Härte (22) oder Härteschlupfbereich (22) nahe aneinander angrenzen, oder gar sich ganz oder teilweise entlang der Laufbahnnnormalen (29) überlagern oder überlappen.

9. Wälzlageranordnung für eine Drehverbindung nach Anspruch 1 **gekennzeichnet dadurch, dass**
in jeder Laufbahn (16 ; 17) der Wälzkörperanordnung mindestens ein Überlappungsbereich (12) mit einen Bereich geringerer Härte (22) gegeben ist.

10. Wälzlageranordnung für eine Drehverbindung nach Anspruch 1 **gekennzeichnet dadurch, dass**
die Auslaufbereiche (10) der gehärteten Bereiche (9), insbesondere die Auslaufbereiche (10) der Härtezonen (11), im Überlappungsbereich (12) unter einem bestimmten Winkel (ε) zwischen 0° und 90°, vorzugsweise unter einem Winkel (ε) von größer als 5° und kleiner als 85°, gegenüber der Laufbahnnormalen (29) geneigt sind.

11. Wälzlageranordnung für eine Drehverbindung nach Anspruch 7 **gekennzeichnet dadurch, dass**
die den Hinterschliff-bereich (21) überrollenden Wälzkörper (2) sich dort in der Hauptsache vom gehärteten Bereich (9) oder den Härtezonen (11) abstützen und von diesen getragen werden.

12. Wälzlageranordnung für eine Drehverbindung nach Anspruch 1 **gekennzeichnet dadurch, dass**
die Einhärtetiefe (23) des gehärteten Bereiches (9) oder der Härtezone (11) geringer ist als 20 mm, vorzugsweise geringer ist als 10 mm.

13. Wälzlageranordnung für eine Drehverbindung nach Anspruch 1 **gekennzeichnet dadurch, dass**
der spurförmige oder bandartige Bereich geringerer Härte (22) schmaler ist als 200 mm, vorzugsweise schmaler ist als 50 mm.

14. Wälzlageranordnung für eine Drehverbindung nach Anspruch 1 **gekennzeichnet dadurch, dass**
mindestens ein Wälzlagerring (3 ; 4) aus einem Vergütungsstahl oder Wälzlagerstahl Werkstoff, beispielsweise aus einem 25CrMo4 oder 42rCrMo4 Werkstoff, vorzugsweise auch aus C45N, insbesondere auch aus einem Halbedelstahl Werkstoff, wie etwa X20Cr13, besteht.

15. Wälzlageranordnung für eine Drehverbindung nach Anspruch 1 **gekennzeichnet dadurch, dass**
gehärtete Bereiche (9 ; 11) eine Rockwell-Härte zwischen 48 HRC und 65 HRC aufweisen und Bereiche geringerer Härte (22) eine Rockwell-Härte von beispielsweise weniger als 48 HRC, oder insbesondere die Kernhärte des Grundwerkstoffes, aufweisen.

## Claims

1. Antifriction bearing arrangement for a rotary joint with ball, cylindrical roller, spherical roller, or tapered roller shaped rolling elements, for example a ballshaped rolling element raceway system (1), preferably also a roller/ball combination raceway system (15) for the purpose of relative adjustment of several at or against each other pivot-mounted rotary elements (3 ; 4) in particular two at or against each other pivot-mounted antifriction bearing rings, for example even also several at each other pivot-mounted ring segments, or segmented rings, at which at least one antifriction element raceway (16 ; 17) is hardened along its ring shape at the contact area between rolling element (2) and antifriction bearing ring (3 ; 4), specifically is hardened by applying an induction or inductive hardening process,
**Characterized by** the fact that
At least one overlap area (12) at the beginning and at the end of the at least one hardened antifriction element raceway (16 ; 17) is given that reaches along such antifriction element raceway (16 ; 17) in which such overlap area (12) exhibits an area of lesser hardness (22) than the hardened area (9 ; 11) surrounding it, preferably an unhardened and/or annealed area, in particular a hardness slip area (22) that extends slanting or diagonally, perhaps also nonlinear throughout the overlap area (12).

2. Antifriction bearing arrangement for a rotary joint according to claim 1,
**characterized by** the fact that
The beginning and the end of the raceway hardening, particularly the beginning area and the ending area of the hardened section (9 ; 12) of a raceway (16 ; 17), overlay, overlie, or overlap along the raceway perpendicular (29).

3. Antifriction bearing arrangement for a rotary joint according to claim 1,
**characterized by** the fact that
The hardness slip area (22) or the area of lesser hardness (22) extends slanted at a certain angle (ε) between 0 degrees and 90 degrees against the raceway perpendicular (29), preferably at an angle (ε) greater than 5 degrees and smaller than 85 degrees against the raceway perpendicular (29), specifically at an angle (ε) of ca. 45 degrees against the raceway perpendicular (29).

4. Antifriction bearing arrangement for a rotary joint according to claim 1,
**characterized by** the fact that
The hardness slip area (22) or the area of lesser hardness (22) extends in direction of an imaginary connecting line (30) between the upper and the lower overlap area (12), in which the actual course of such hardness slip area (22) at least partially follows a freeform and/or a curve shape and/or an arc shape.

5. Antifriction bearing arrangement for a rotary joint according to claim 1,
**characterized by** the fact that
The hardness slip area (22) or the area of lesser hardness (22) extends in direction of an imaginary connecting line (30) between the upper and the lower overlap area (12), while the actual course of such hardness slip area (22) at least includes one approximately straight section.

6. Antifriction bearing arrangement for a rotary joint according to claim 1,
**characterized by** the fact that
The area of lesser hardness (22) extends trail-like or band-like throughout the overlap area (12), for example following a freeform and/or a curve shape and/or an arc shape, in particular includes at least one approximately straight partial section.

7. Antifriction bearing arrangement for a rotary joint according to claim 1,
**characterized by** the fact that
The at least one overlap area (12) exhibits an area of lesser hardness (22) than the hardness of the area surrounding it (9 ; 11), in which such area of lesser hardness (22) is fully or partly reworked in a material removing process, for example by a chip removing process, in particular by a finish grinding or relief grinding process, so that specifically a trail-like or band-like relief-ground area (21) results.

8. Antifriction bearing arrangement for a rotary joint according to claim 7,
**characterized by** the fact that
Relief-ground area (21) and area of lesser hardness (22) or hardness slip area (22) are bordering close to each other, or even partly or completely overlie or overlap each other along the raceway perpendicular (29).

9. Antifriction bearing arrangement for a rotary joint according to claim 1,
**characterized by** the fact that
In each raceway (16 ; 17) of such antifriction bearing arrangement at least one overlap area (12) that includes an area of lesser hardness (22) is given.

10. Antifriction bearing arrangement for a rotary joint according to claim 1,
**characterized by** the fact that
The runout zones (10) of the hardened areas (9), particularly the runout zones (10) of the hardened zones (11) are slanted in the overlap area (12) at a certain angle (ε) between 0 degrees and 90 degrees against the raceway perpendicular (29), preferably at an angle (ε) greater than 5 degrees and smaller than 85 degrees against the raceway perpendicular (29).

11. Antifriction bearing arrangement for a rotary joint according to claim 7,
**characterized by** the fact that
There the antifriction elements (2) rolling over the relief-ground area (21) mainly support against the hardened area (9), or the hardened zones (11) and are borne by the same.

12. Antifriction bearing arrangement for a rotary joint according to claim 1,
**characterized by** the fact that
The hardness penetration depth (23) of the hardened area (9), or the hardened zone (11) is less than 20 mm, preferably less than 10 mm.

13. Antifriction bearing arrangement for a rotary joint according to claim 1,
**characterized by** the fact that
The trail-like or band-like area of lesser hardness (22) is less than 200 mm wide, preferably is less than 50 mm wide.

14. Antifriction bearing arrangement for a rotary joint according to claim 1,
**characterized by** the fact that
At least one antifriction bearing ring (3 ; 4) is made of heat-treatable steel or antifriction bearing steel material, for example 25CrMo4 or 42CrMo4 material, preferably also made of C45N, specifically also made of high-alloy stainless steel material such as X20Cr13.

15. Antifriction bearing arrangement for a rotary joint according to claim 1,
**characterized by** the fact that
Hardened areas (9 ; 11) exhibit some Rockwell hardness between 48 HRC and 65 HRC, while areas of lesser hardness (22) exhibit a Rockwell hardness of less than 48 HRC, or specifically exhibit the core hardness of the basic material.

## Revendications

1. Disposition de roulements pour une liaison rotative comportant des corps de roulement en forme de billes, de cylindres, de barillets ou de cônes, par exemple un système de chemins de roulement (1) pour corps de roulement à billes, de préférence également un système de chemins de roulement combinés (15) rouleaux / billes, en vue d'un décalage relatif de plusieurs corps tournants (3 ; 4) montés l'un sur l'autre ou l'un en opposition à l'autre, en particulier de deux bagues de palier à roulement montées l'une sur l'autre ou l'une en opposition à l'autre, voire par exemple même plusieurs segments de bague ou bagues segmentées montés les uns sur les autres ; au moins un chemin de roulement (16 ; 17) étant trempé le long de sa forme annulaire dans la zone de contact entre corps de roulement (2) et bague de palier à roulement (3 ; 4), en particulier ayant été trempé par un procédé de trempe inductif ou par induction,
**caractérisée en ce qu'**
au moins une zone de chevauchement (12) est donnée au début et à la fin d'au moins l'un des chemins de roulement (16 ; 17) trempés pour les corps de roulement ; ladite zone de chevauchement s'étendant le long dudit chemin de roulement (16 ; 17), où ladite zone de chevauchement (12) présente une zone de dureté moindre (22) que celle de la zone trempée (9 ; 11) qui l'entoure, de préférence une zone non trempée et/ou revenue, en particulier une zone de lacune de la trempe (22) laquelle s'étend de manière inclinée ou oblique, par exemple également de manière non linéaire, à travers la zone de chevauchement (12).

2. Disposition de roulements pour une liaison rotative selon la revendication 1, **caractérisée en ce que**
le début et la fin de la trempe du chemin de roulement, en particulier la zone initiale et la zone terminale de la zone trempée (9 ; 11) d'un chemin de roulement (16 ; 17) se recouvrent, se superposent ou se chevauchent le long des normales de chemin de roulement (29).

3. Disposition de roulements pour une liaison rotative selon la revendication 1, **caractérisée en ce que**
la zone de lacune de la trempe (22) ou la zone de dureté moindre (22) s'incline à un angle (ε) défini par rapport aux normales de chemin de roulement (29) entre 0° et 90°, de préférence s'étend à un angle (ε) par rapport aux normales de chemin de roulement (29) supérieur à 5° et inférieur à 85°, en particulier à un angle (ε) par rapport aux normales de chemin de roulement (29) approximativement de 45°.

4. Disposition de roulements pour une liaison rotative selon la revendication 1, **caractérisée en ce que**
la zone de lacune de la trempe (22) ou la zone de dureté moindre (22) s'étend dans le sens d'une ligne de jonction imaginaire (30) entre la zone de chevauchement (12) supérieure et la zone de chevauchement inférieure ; le tracé réel de ladite zone de lacune de la trempe (22) suivant, tout au moins partiellement, une forme libre et/ou une forme de courbe et/ou une forme d'arc.

5. Disposition de roulements pour une liaison rotative selon la revendication 1, **caractérisée en ce que**
la zone de lacune de la trempe (22) ou la zone de dureté moindre (22) s'étend dans le sens d'une ligne de jonction imaginaire (30) entre la zone de chevauchement (12) supérieure et la zone de chevauchement inférieure ; le tracé réel de ladite zone de lacune de la trempe (22) contenant au moins un élément approximativement droit.

6. Disposition de roulements pour une liaison rotative selon la revendication 1, **caractérisée en ce que**
la zone de dureté moindre (22) s'étend en forme de piste ou de bande à travers la zone de chevauchement (12), par exemple suivant une forme libre et/ou une forme de courbe et/ou une forme d'arc, comporte en particulier au moins un élément approximativement droit.

7. Disposition de roulements pour une liaison rotative selon la revendication 1, **caractérisée en ce qu'**
au moins une zone de chevauchement (12) présente une zone de dureté moindre (22) que celle de la zone (9 ; 11) qui l'entoure directement ; ladite zone de dureté moindre (22) étant rectifiée entièrement ou partiellement par enlèvement, par exemple rectifiée par enlèvement de copeaux, en particulier rectifiée par meulage ou dépouillée à la meule de façon à obtenir en particulier une zone de dépouille (21) en forme de piste ou de bande.

8. Disposition de roulements pour une liaison rotative selon la revendication 7, **caractérisée en ce que**
zone de dépouille (21) et zone de dureté moindre (22) ou zone de lacune de la trempe (22) sont pratiquement contiguës, ou voire se superposent ou se chevauchent entièrement ou partiellement le long des normales de chemin de roulement (29).

9. Disposition de roulements pour une liaison rotative selon la revendication 1, **caractérisée en ce qu'**
au moins une zone de chevauchement (12) avec une zone de dureté moindre (22) est donnée dans chacun des chemins de roulement (16 ; 17) de la disposition de roulements.

10. Disposition de roulements pour une liaison rotative selon la revendication 1, **caractérisée en ce que**
les zones de sortie (10) des zones trempées (9), en particulier les zones de sortie (10) des zones de trempe (11), sont inclinées dans la zone de chevauchement (12) à un angle défini (ε) compris entre 0° et 90°, de préférence à un angle (ε) supérieur à 5° et inférieur à 85°, par rapport aux normales de chemin de roulement (29).

11. Disposition de roulements pour une liaison rotative selon la revendication 7, **caractérisée en ce que**
les corps de roulement (2) exerçant une rotation sur la zone de dépouille (21) y sont principalement supportés par la zone trempée (9) ou les zones de trempe (11) et sont soutenus par ces dernières.

12. Disposition de roulements pour une liaison rotative selon la revendication 1, **caractérisée en ce que**
la profondeur de pénétration de trempe (23) de la zone trempée (9) ou de la zone de trempe (11) est inférieure à 20 mm, de préférence inférieure à 10 mm.

13. Disposition de roulements pour une liaison rotative selon la revendication 1, **caractérisée en ce que**
la zone en forme de piste ou de bande de dureté moindre (22) a une largeur inférieure à 200 mm, de préférence une largeur inférieure à 50 mm.

14. Disposition de roulements pour une liaison rotative selon la revendication 1, **caractérisée en ce qu'**
au moins une bague de palier à roulement (3 ; 4) consiste en un acier d'amélioration ou acier pour palier à roulement, par exemple en un matériau 25CrMo4 ou 42rCrMo4, de préférence également en C45N, en particulier également en un matériau acier semiinoxydable, comme par exemple X20Cr13.

15. Disposition de roulements pour une liaison rotative selon la revendication 1, **caractérisée en ce que**
des zones trempées (9 ; 11) présentent une dureté Rockwell comprise entre 48 HRC et 65 HRC et des zones de dureté moindre (22) une dureté Rockwell de par exemple inférieure à 48 HRC, ou en particulier la trempe à coeur du matériau de base.
